# EUROPEAN PATENT APPLICATION

(11) **EP 2 772 834 A2**
(43) Date of publication of application: **03.09.2014**
(21) Application number: 12182157.3
(22) Date of filing: 29.08.2012
(51) Int. Cl.: G06F 3/041, G06F 3/044

(54) **Touch-on-lens device and method for manufacturing the same**

(30) Priority: 01.09.2011 CN 201110269450
(71) Applicant: TPK Touch Solutions (Xiamen) Inc., Fujian 361009 (CN)
(72) Inventor: Yau, Chen Jiang, 302 Zhubei City (CN); Kwan, Sin Ho, 351 Toufen Town (CN); Ching, Shan Lin, 804 Gushan (CN); Maolin, Liao, Zhangzhou City (CN); Jun, Yao Huang, Toufen Township (CN); Chih, Wei Chen, 350 Zhunan Township (CN); Po, Pin Hung, Jingcheng Township (CN)
(74) Representative: Berkkam, Ayfer

(57) **Abstract**

The present disclosure relates to a touch-on-lens (TOL) device and a method for manufacturing the same. The method includes forming a plastic layer and a touch layer; cutting the plastic layer and the touch layer; and finally laminating the plastic layer and the touch layer after cutting to a strengthened lens. The method can not only help keep good mechanical property but can also help improve the efficiency of mass production. Moreover, the present disclosure adopts a photoetching process to form a sensing pattern, thereby making the circuit thinner and beautifying the appearance.

## Description

### BACKGROUND

### TECHNICAL FIELD

The present disclosure relates to a touch device, and more particularly to a touch-on-lens (TOL) device and a method for manufacturing the same.

### DESCRIPTION OF THE RELATED ART

A capacitive touch device generally comprises X-axis and Y-axis transparent electrodes. When a user touches the device, capacitance of touch point changes and a system determines location of the touch point by detecting the change in capacitance.

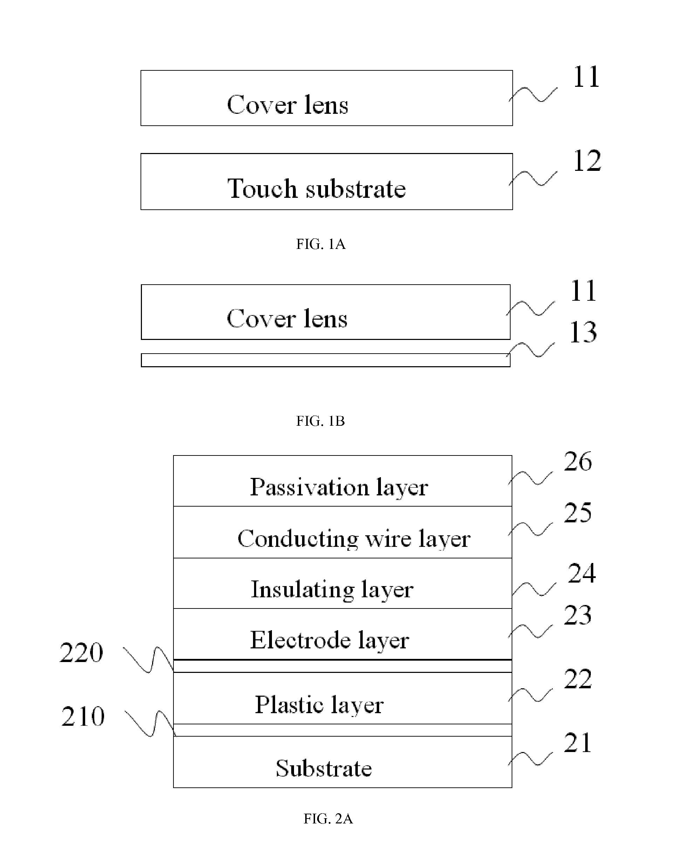

FIG. 1A shows a schematic stacked view of a conventional capacitive touch device that mainly comprises of a cover lens 11 and a touch substrate 12. A touch layer, which comprises of transparent electrodes, is formed at either a single side or both sides of the touch substrate 12. FIG. 1B shows a schematic stacked view of a conventional touch-on-lens (TOL) device that leaves out the a touch substrate and directly disposes a touch layer 13, such as an ITO layer, on a cover lens 11 without adding a glass substrate so as to make the touch device thinner.

Generally, there are two methods for manufacturing an existing touch-on-lens (TOL) device. The first method includes: strengthening a small piece of lens, namely a piece of lens that meets size of a touch panel, and then stacking a touch unit and other stack structures on the lens through a photoetching process. The second method includes: stacking a touch layer and other stack structures on a large-size motherboard of strengthened glass through a photoetching process, and then cutting the glass motherboard into a touch panel with a specific size through a process of glass motherboard cutting and edge polishing, etc. However, the above-mentioned two methods have some defects; for example, for the first method, cost of a single piece output is very high and efficiency of mass production is low, that do not meet economic benefit. Comparing with the first method, cost of single piece output for the second method is comparatively low and efficiency of mass production is comparatively high, but for the touch panel after cutting process, mechanical property of the glass is weakened because of no edge strengthening process.

Further, there is another traditional manufacturing process including:, forming a sensing pattern of a touch layer on a PET (ethylene terephthalate) film through a printing process so as to form a PET touch motherboard; and then, cutting the PET touch motherboard into a touch panel with a specific size so as to form a touch sub-panel; and finally, laminating the touch sub-panel on the strengthened lens of corresponding size. Comparing with the above-mentioned two manufacturing processes, this manufacturing process is high in efficiency of mass production and good in mechanical property. However, limited by the properties of a PET film such as incapability of high-temperature resistance, weak hardness, etc., a touch sensing pattern is formed on a PET film generally through a printing process rather than through a photoetching process. But in the process of printing the touch sensing pattern, line width of the touch sensing pattern formed by the printing method is comparatively wide due to an influence of the printing device, printing ink, and printing technique, etc., that makes the circuit visible and affects appearance of the product. Moreover, generally thickness of a PET film is 25µm-350µm, which reduces the capability of making the touch panel thinner.

In view of the defects of conventional touch-on-lens (TOL) device and manufacturing process, it is desired to provide a novel touch-on-lens (TOL) device and a method for manufacturing the same so that the above problems can be solved.

### SUMMARY OF THE INVENTION

An object of the embodiments of the present disclosure is to provide a touch-on-lens (TOL) device and a method for manufacturing the same, forming a touch layer with a large area on a plastic layer through a photoetching process and improving existing problems of low efficiency of mass production of touch-on-lens devices, bad mechanical strength, and circuit visibility, etc. through a cutting technique.

According to one embodiment of the present disclosure, a method for manufacturing a touch-on-lens device comprises the following steps: (1) forming a plastic layer on a substrate; (2) forming a touch layer on the plastic layer such that the touch layer and the plastic layer form a touch film; (3) separating the touch film and the substrate; (4) cutting the touch film to form a plurality of touch modules; and (5) laminating the touch modules to a strengthened lens.

In one embodiment, the plastic layer is a polyimide (PI) layer or a polyesterimide layer.

In another embodiment, the touch layer comprises a sensing pattern, which is formed by a photoetching process.

In yet another, the touch-on-lens device further comprises a release layer, which is formed between a plastic layer and a substrate and is made up of a silicon-based or a F-based compound.

Further, adhesive strength between the substrate and the release layer is at least three times the adhesive strength between the release layer and the plastic layer.

Furthermore, the touch film comprises a buffer layer that is formed between the touch layer and the plastic layer and is made up of derivative or compound of silicon.

In one embodiment of the present disclosure, thickness of the plastic layer is less than 25µm.

In one embodiment, a method for manufacturing a touch-on-lens device further comprises forming a mask layer on strengthened lens, wherein the mask layer and the touch modules are at a same side of the strengthened lens.

According to another embodiment of the present disclosure, a method for manufacturing a touch-on-lens device comprises the following steps: (1) forming a plastic layer on a motherboard; (2) forming a touch layer on the plastic layer so that the motherboard, the plastic layer, and the touch layer form a touch assembly; (3) cutting the touch assembly to form a plurality of touch sub-assemblies; (4) laminating the touch sub-assemblies to a strengthened lens; and (5) separating the motherboard after cutting.

Further, the plastic layer is a polyimide (PI) layer or a polyesterimide layer.

Further, the touch layer comprises a sensing pattern, which is formed by a photoetching process.

The touch assembly further comprises a release layer, that is formed between the plastic layer and the motherboard and is made up of silicon-based or F-based compound.

The touch assembly further comprises a buffer layer, which is formed between the touch layer and the plastic layer and is made up of derivative or compound of silicon.
Further, the plastic layer and the touch layer of the touch assembly constitute a touch film. The touch sub-assembly comprises the motherboard and a touch module which is formed after cutting the touch film. The lamination process of step (4) further comprises laminating the touch modules of the touch sub-assemblies to the strengthened lens.

The method for manufacturing a touch-on-lens device further comprises forming a mask layer on strengthened lens, wherein the mask layer and the touch modules are at the same side of the strengthened lens.

According to another embodiment of the present disclosure, a touch-on-lens device comprises: a strengthened lens; and a touch module, that is laminated to the strengthened lens and formed by cutting a touch film, wherein the touch film comprises of a touch layer and a plastic layer, further wherein thickness of the plastic layer is less than 25µm.

In one embodiment of the present disclosure, thickness of the plastic layer is between 10µm - 20µm.

In one embodiment of the present disclosure, thickness of the plastic layer is between 0.5µm - 10µm.

In yet another embodiment, the plastic layer is a polyimide (PI) layer or a polyesterimide layer.

In an embodiment, the touch layer comprises a sensing pattern, which is formed by a photoetching process.

Further, the touch film further comprises a buffer layer, which is formed between the touch layer and the plastic layer and is made up of derivative or compound of silicon.

The touch-on-lens device further comprises a mask layer, wherein the mask layer and the touch module are formed at the same side of the strengthened lens.

Since the present disclosure adopts the above method, namely, first forming a plastic layer on a substrate, and then forming a touch layer on the plastic layer and finally laminating the touch layer after cutting to a strengthened lens, and since the present disclosure adopts the method of cutting first and then laminating the touch layer, the present method can not only keep good mechanical property but can also enhance efficiency of mass production. Moreover, the present disclosure adopts a photoetching process to form a sensing pattern, which can make the circuit thinner so as to beautify the appearance.

### BRIEF DESCRIPTION OF THE DRAWINGS

FIG. 1A shows a schematic stacked view of a conventional capacitive touch device;

FIG. 1B shows a schematic stacked view of a conventional touch-on-lens (TOL) device;

FIG. 2A to FIG. 2F show schematic stacked views of a touch-on-lens device during the process in accordance with a first embodiment of the present disclosure;

FIG. 3A shows an electrode layer in accordance with the present embodiment;

FIG. 3B shows an insulating layer in accordance with the present embodiment;

FIG. 3C shows a conducting wire layer in accordance with the present embodiment;

FIG. 4A to FIG. 4F show schematic stacked views of a touch-on-lens device during the process in accordance with a second embodiment of the present disclosure.

### DETAILED DESCRIPTION OF THE EMBODIMENTS

FIG. 2A to FIG. 2F show schematic stacked views of a touch-on-lens device during the process in accordance with the first embodiment of the present disclosure. In this specification and the drawings, the upward side refers to the direction of a touch surface. Thickness of each layer shown in the drawings is not drawn according to the actual proportion. Besides, the drawings only show the main layers in accordance with the embodiments, and other layers can be inserted between the layers according to the actual need.

Referring to FIG. 2A, a transparent plastic layer 22 is firstly formed on a substrate 21. The substrate 21 can be a glass substrate, plastic film, or other hard substrates, and the substrate 21 can be separated from the other parts so that it can be used for other processes again. In the present embodiment, the plastic layer 22 is a polyimide (PI) layer or a polyesterimide layer, but other plastics that are easy to be separated from the substrate can also be used, such as ceramic thin film (such as SiO₂). Comparing with conventional polyethylene terephthalate (PET), using polyimide (PI) as the material of the plastic layer 22 at least has the following effects: for example, comparatively easy to be separated from the substrate 21 in the future; high-temperature resistance; and good optical characteristics. Comparing with conventional PET, using polyesterimide as the material of the plastic layer 22 at least has the following effects: for example, high mechanical strength, high light transmittance or high chemical resistance, which can effectively protect a touch layer (23, 24, 25) from being eroded by a weak acid (such as sweat). Preferably, thickness of the plastic layer 22 is less than 25µm. In a more preferred embodiment, thickness of the plastic layer 22 is between 10-22µm. In a most preferred embodiment, thickness of the plastic layer 22 is between 0.5µm - 10µm.

Generally, thinner the thickness of the plastic layer 22 is, better the light transmittance of the touch panel will be and the thinner the touch panel will be. Comparing with a conventional touch-on-lens (TOL) device, the device in the present embodiment has a comparatively thin plastic layer 22, and therefore a thinner touch-on-lens (TOL) device can be made. Besides, in order to separate more easily, the plastic layer 22 can form on the substrate 21, a high contact-angle material, which is deposited or coated on the substrate 21 before forming the plastic layer 22.

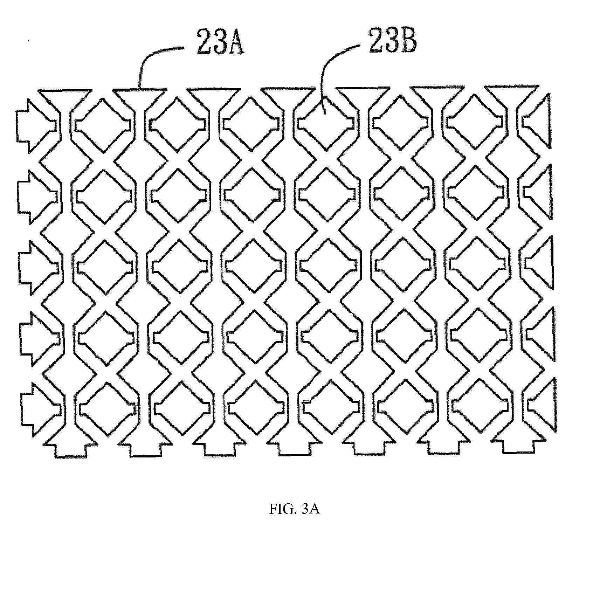

Further, a transparent electrode layer 23, such as a sputtering ITO layer but not limited to it, is formed on the plastic layer 22. FIG. 3A shows an electrode layer 23 in accordance with the present embodiment, wherein the electrode layer 23 comprises a plurality of first electrodes 23A along a first axis (such as Y-axis) that are connected with each other along the first axis and a plurality of second electrodes 23B along a second axis (such as X-axis) that are not connected with each other. Sensing pattern of the electrode layer 23 can be made by a photoetching process. The photoetching process comprises photoresist coating, exposure, developing, baking, etching, stripping and other processing steps.

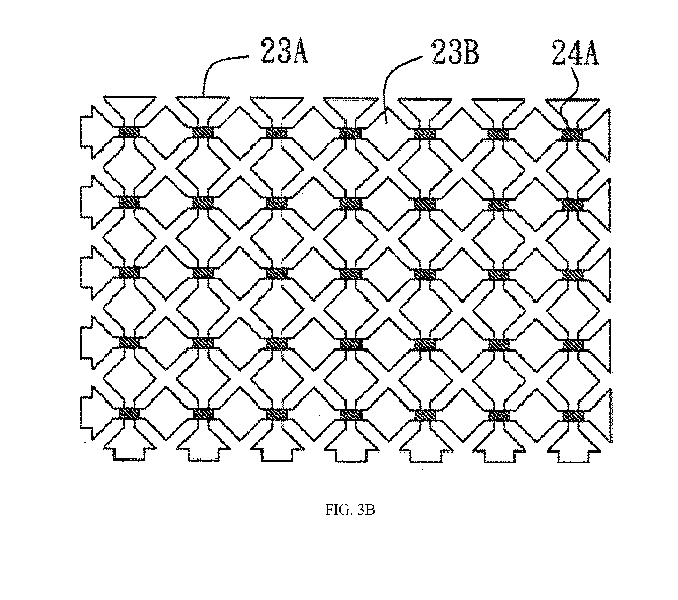

A transparent insulating layer 24, such as a polyimide (PI) layer but not limited to it, is formed on the electrode layer 23. FIG. 3B shows an insulating layer 24 in accordance with the present embodiment, wherein the insulating layer 24 comprises a plurality of insulating blocks 24A that respectively cover area between adjacent second electrodes 23B along the second axis (such as X-axis).

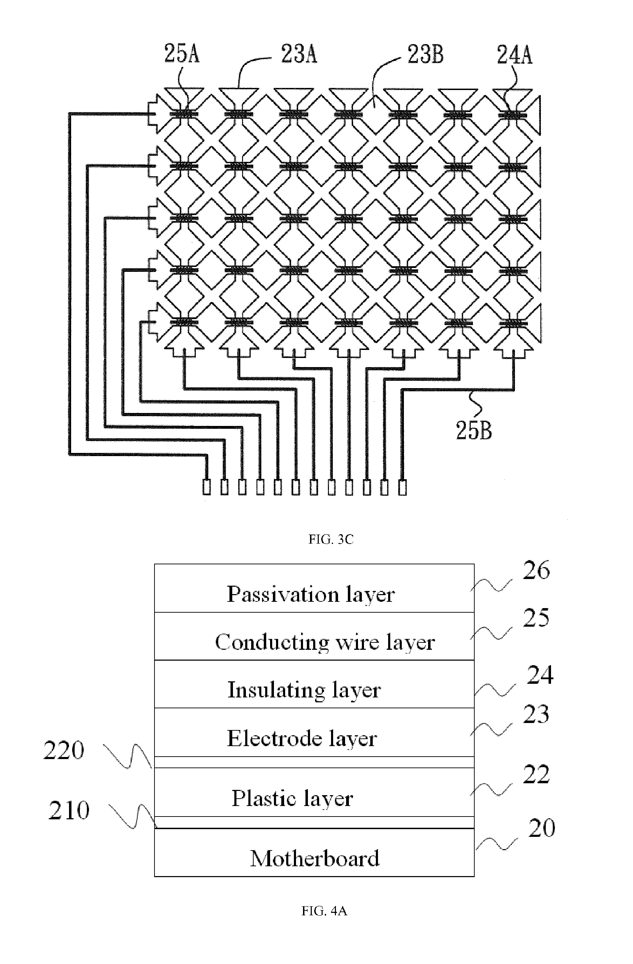

A conducting wire layer 25, such as a sputtering metal wire layer but not limited to it, is formed on the insulating layer 24. FIG. 3C shows a conducting wire layer 25 in accordance with the present embodiment, wherein the conducting wire layer 25 comprises a plurality of wire segments 25A, which are respectively bridged over the insulating blocks 24A to electrically couple the adjacent second electrodes 23B along the second axis (such as X-axis) and a plurality of trace wires 25B, which are used for electrically coupling the first-axis and the second-axis electrodes respectively and extend to the border of the touch-on-lens (TOL) device. Pattern of the conducting wire layer 25 can be made by a photoetching process. The electrode layer 23, the insulating layer 24, and the conducting wire layer 25 jointly form a single-layer touch layer. In an embodiment, if material of the electrode layer 23 is ITO, the single-layer touch layer can also be called as single-layer ITO (SITO). The electrode layer 23, the insulating layer 24, and the conducting wire layer 25 constitute a touch layer of the present embodiment, but the touch layer of the present disclosure is not limited to the above composition and arrangement methods. The plastic layer 22 and the touch layer (23, 24, 25) form a touch film, wherein the touch layer (23, 24, 25) comprises a plurality of touch units, size of which meets specific size of a touch panel.

In an embodiment, a passivation layer 26 can be formed on a conducting wire layer 25, wherein the passivation layer 26 can not only protect an electrode layer 23, an insulating layer 24, and a conducting wire layer 25 from damage but can also prevent them from getting oxidized or corroded.

Further, a release layer 210 can be formed between substrate 21 and plastic layer 22, for example, by using a coating technique. The release layer 210 can be made of silicon-based or F-based compound, but it is not limited to this. In one embodiment, the plastic layer 22 is a polyesterimide layer, which is formed by coating (such as spin coating) a monomer on the release layer 210 and then processing through a curing process. In one embodiment, adhesive strength between the substrate 21 and the release layer 210 is higher than (such as three times) the adhesive strength between the release layer 210 and the plastic layer 22, which makes the plastic layer 22 easy to be separated from the release layer 210 by an external force while the release layer 210 is completely retained on the substrate 21.

Further, a buffer layer 220 can be formed between plastic layer 22 and electrode layer 23, for example, by using a deposition technique. The buffer layer 220 can be made of derivative or compound of silicon, such as silicon nitride or silicon oxide, but it is not limited to this. In a preferable embodiment, thickness of the buffer layer 220 is 10nm (nanometer) or more than 200nm. By disposing the buffer layer 220, adhesive strength between the plastic layer 22 and the touch layer (23, 24, 25) can be increased, and surface tension of the plastic layer 22 can be absorbed.

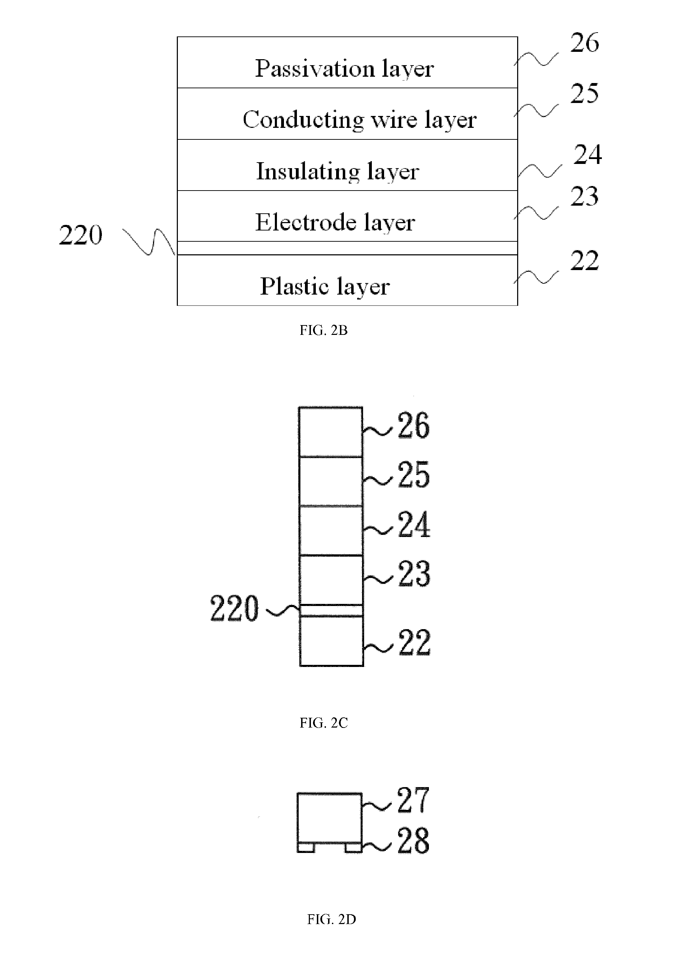

Further, touch film 22-25 and substrate 21 can be separated to form a structure shown in FIG. 2B. Referring to FIG. 2C, the touch film can be cut so that each touch unit forms a touch module and each touch module can form an independent touch panel through a subsequent process. Comparing with the conventional method of manufacturing one unit by one unit, the present embodiment forms a plurality of touch units, sizes of which meet the specific size of a touch panel, on a plastic layer 22, and then cut the formed touch units, which contributes to improvement in efficiency of mass production of the touch-on-lens (TOL) device, thereby enhancing productivity.

Further, before or after forming stack structure as shown in FIG. 2C, a strengthened lens 27 (also referred to as cover lens hereinafter) can additionally be provided, as shown in FIG. 2D. The strengthened lens 27 can be made by cutting a glass motherboard into one that meets the size of a touch module, and then by performing an edge polishing. Comparing with the conventional method of cutting the glass after depositing the stacked touch layer, the strengthened lens 27 in the present embodiment has a strengthened edge and mechanical property. A mask layer (or a black matrix layer) 28 can be formed on the strengthened lens 27 by a printing technique.

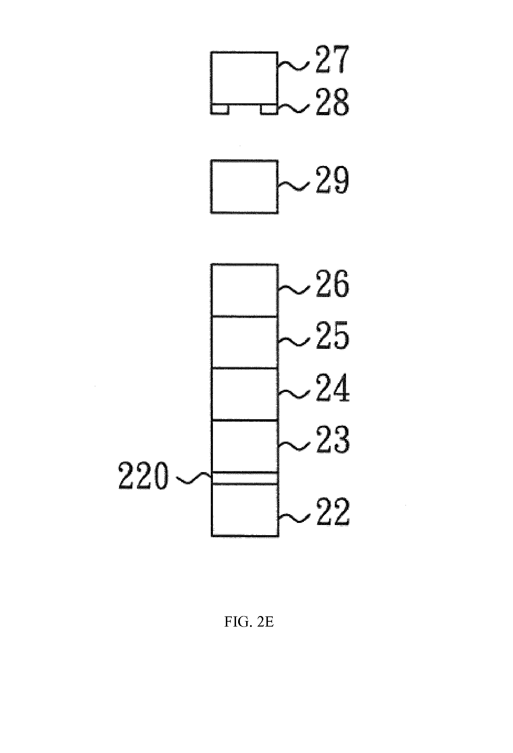

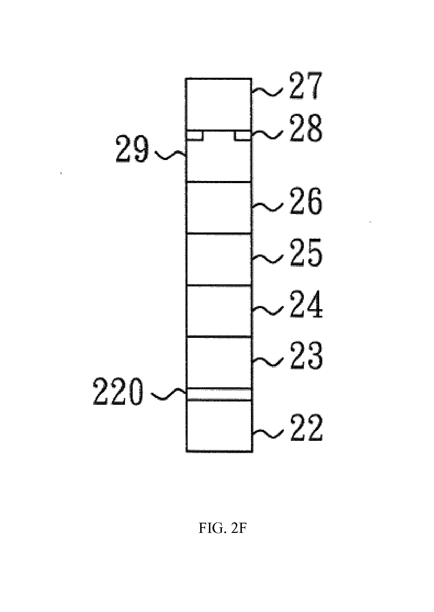

Referring to FIG. 2E, for forming the structures of the touch module (as shown in FIG. 2C) and for forming the strengthened lens 27 (as shown in FIG. 2D) together, an adhesive layer 29, such as liquid adhesive, can be used for gluing the two structures together; namely, the upper surface of the adhesive layer 29 can be glued to the lower surface of the strengthened lens 27 and the mask layer 28, and the lower surface of the adhesive layer 29 can be glued to the upper surface of the passivation layer 26. In case, the passivation layer 26 is not formed, lower surface of the adhesive layer 29 can be glued to the upper surface of the touch layer (23, 24, 25), that is, the mask layer 28 and the touch module 22-26 can be formed at the same side of the strengthened lens 27. After gluing, stack structure shown in FIG. 2F is formed, namely, the structure from the bottom to the top comprises a plastic layer 22, a buffer layer 220, an electrode layer 23, an insulating layer 24, a conducting wire layer 25, a passivation layer 26, an adhesive layer 29, a mask layer 28, and a strengthened lens 27.

According to the above method for manufacturing a touch-on-lens (TOL) device, a touch layer (23, 24, 25) is firstly formed on a plastic layer 22 and then glued to a strengthened lens 27 that has been cut and processed with a high strength. Therefore, the requirement for strength of various end products can be reached and mass production can be carried out. For the touch-on-lens (TOL) device formed by the above process, if ITO is used as the material of the electrode layer 23, and polyimide (PI) is used as the material of the plastic layer 22, the process is suitable for making a curved-surface touch-on-lens device as adhesiveness of the two materials is very good and not easy to crack. Besides, the conducting wire layer 25 does not contact with the mask layer 28 directly, and therefore there will be no open circuit problem unlike the conventional problem of an open circuit being formed by height difference of the mask layer 28.

FIG. 4A to FIG. 4F show schematic stacked views of a touch-on-lens device during the process in accordance with a second embodiment of the present disclosure. The present embodiment is similar to the first embodiment (as shown in FIG. 2A to FIG. 2F), in terms of the materials, thickness, manufacturing process and other effects.

Referring to FIG. 4A, a transparent plastic layer 22 is firstly formed on a motherboard 20. The motherboard 20 can be glass substrate, plastic film or other hard substrates, and the motherboard 20 can be separated from the other parts.

Further, a transparent electrode layer 23, a transparent insulating layer 24, and a conducting wire layer 25 are formed on the plastic layer 22 in sequence. The electrode layer 23, the insulating layer 24, and the conducting wire layer 25 constitute a touch layer of the present embodiment. The motherboard 20, the plastic layer 22, and the touch layer (23, 24, 25) form a touch assembly, wherein the touch layer (23, 24, 25) comprises a plurality of touch units.

In one embodiment of the present disclosure, a passivation layer 26 can also be formed on the conducting wire layer 25, which can not only protect the electrode layer 23, the insulating layer 24, and the conducting wire layer 25 from damage but can also prevent them from getting oxidized or corroded.

Further, a release layer 210 can also be formed between the motherboard 20 and the plastic layer 22, and a buffer layer 220 can also be formed between the plastic layer 22 and the electrode layer 23.

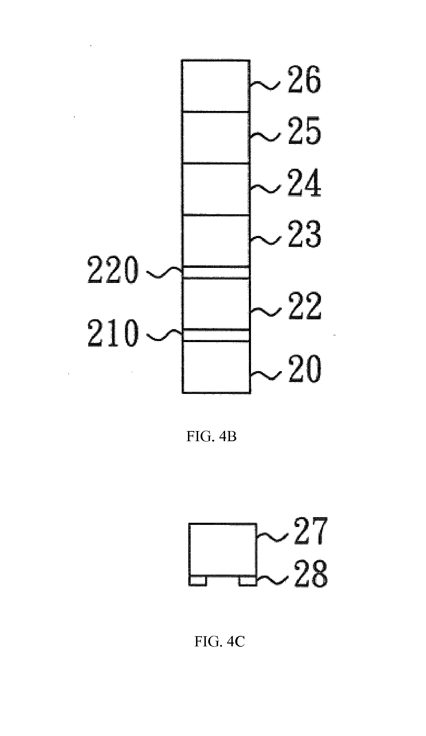

Further, referring to FIG. 4B, the touch assembly can be cut so that each touch unit forms an independent touch sub-assembly. Comparing with the conventional method of manufacturing one unit by one unit, the present embodiment firstly forms a plurality of touch units and then cuts them, which contributes to increasing possibility of mass production of the touch-on-lens (TOL) device and to enhancing productivity.

In an embodiment, before or after forming the stack structure shown in FIG. 4B, a strengthened lens 27 can additionally be provided, as shown in FIG. 4C. A mask layer 28 can be formed under the strengthened lens 27.

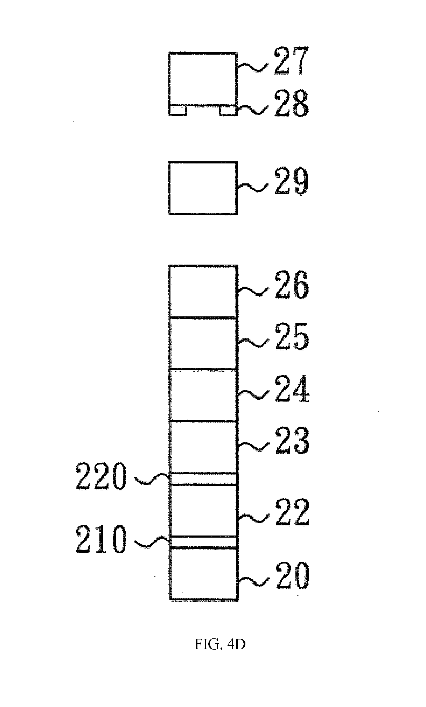

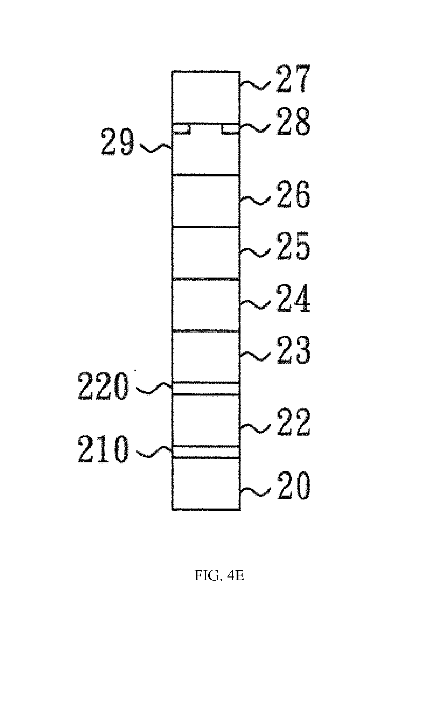

Referring to FIG. 4D, for forming the structures of the touch sub-assembly (as shown in FIG. 4B) and the strengthened lens 27 (as shown in FIG. 4C), an adhesive layer 29 can be used for gluing the two structures together; namely, the upper surface of the adhesive layer 29 can be glued to the lower surfaces of the strengthened lens 27 and the mask layer 28, and the lower surface of the adhesive layer 29 can be glued to the upper surface of the passivation layer 26. If the passivation layer 26 is not formed, the lower surface of the adhesive layer 29 can be glued to the upper surface of the touch layer (23, 24, 25). After gluing, the stack structure shown in FIG. 4E, is formed, wherein the structure from bottom to top comprises a motherboard 20, a release layer 210, a plastic layer 22, a buffer layer 220, an electrode layer 23, an insulating layer 24, a conducting wire layer 25, a passivation layer 26, an adhesive layer 29, a mask layer 28, and a strengthened lens 27.

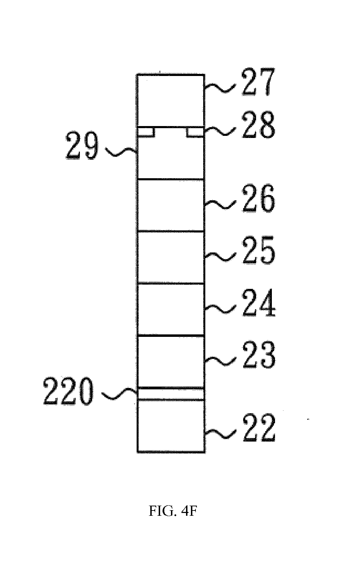

Further, the motherboard 20 is separated from the structure as shown in FIG. 4E, forming the structure as shown in FIG. 4F.

According to the above manufacturing method, a touch-on-lens device can be formed. Referring to FIG. 4F, the touch device comprises a strengthened lens 27 and a touch module (22, 220, 23, 24, 25, 26), wherein the touch module is laminated to the strengthened lens 27. The touch module is formed by cutting a touch film that comprises a touch layer (23, 24, 25) and a plastic layer 22, wherein thickness of the plastic layer is less than 25µm.

In one embodiment of the present disclosure, the plastic layer is a polyimide (PI) layer or a polyesterimide layer; the plastic layer is high-temperature resistant with good optical characteristics, and its thickness can be controlled within a comparatively thin scope. In a preferred embodiment, thickness of the plastic layer 22 is 10-20µm. In a more preferred embodiment, thickness of the plastic layer 22 is 0.5-10µm. Comparing with other plastic layers, such as PET, using the plastic layer can further make the touch-on-lens device thinner.

Although the present disclosure has been described with reference to the embodiments thereof and best modes for carrying out the present disclosure, it is apparent to those skilled in the art that a variety of modifications and changes may be made without departing from the scope of the present disclosure, which is intended to be defined by the appended claims.

## Claims

1. A method for manufacturing a touch-on-lens device, comprising:
(1) forming a plastic layer on a substrate;
(2) forming a touch layer on the plastic layer to make the touch layer and the plastic layer constitute a touch film;
(3) separating the touch film and the substrate;
(4) cutting the touch film to form a plurality of touch modules; and
(5) laminating the touch modules to a strengthened lens.

2. The method for manufacturing a touch-on-lens device as claimed in claim 1, wherein the plastic layer is a polyimide (PI) layer or a polyesterimide layer.

3. The method for manufacturing a touch-on-lens device as claimed in claim 1, wherein the touch layer comprises a sensing pattern formed by a photoetching process.

4. The method for manufacturing a touch-on-lens device as claimed in claim 1, wherein the touch-on-lens device further comprises a release layer formed between the plastic layer and the substrate, further wherein the release layer is made of silicon-based or F-based compound.

5. The method for manufacturing a touch-on-lens device as claimed in claim 4, wherein adhesive strength between the substrate and the release layer is at least three times the adhesive strength between the release layer and the plastic layer.

6. The method for manufacturing a touch-on-lens device as claimed in claim 1, wherein the touch film further comprises a buffer layer, wherein the buffer layer is formed between the touch layer and the plastic layer, further wherein the buffer layer is made of derivative or compound of silicon.

7. The method for manufacturing a touch-on-lens device as claimed in claim 1, wherein thickness of the plastic layer is less than 25µm.

8. The method for manufacturing a touch-on-lens device as claimed in claim 1, further comprising forming a mask layer on the strengthened lens, wherein the mask layer and the touch modules are at the same side of the strengthened lens.

9. A method for manufacturing a touch-on-lens device, comprising the following steps:
(1) forming a plastic layer on a motherboard;
(2) forming a touch layer on the plastic layer, wherein the plastic layer and the touch layer constitute a touch assembly;
(3) cutting the touch assembly to form a plurality of touch sub-assemblies;
(4) laminating the touch sub-assemblies to a strengthened lens; and
(5) separating the motherboard after cutting.

10. The method for manufacturing a touch-on-lens device as claimed in claim 9, wherein the plastic layer is a polyimide (PI) layer or a polyesterimide layer.

11. The method for manufacturing a touch-on-lens device as claimed in claim 9, wherein the touch layer comprises a sensing pattern formed by a photoetching process.

12. The method for manufacturing a touch-on-lens device as claimed in claim 9, wherein the touch assembly further comprises a release layer formed between the plastic layer and the motherboard, further wherein the release assembly is made of silicon-based or F-based compound.

13. The method for manufacturing a touch-on-lens device as claimed in claim 9, wherein the touch assembly further comprises a buffer layer, formed between the touch layer and the plastic layer, further wherein the release assembly is made of derivative or compound of silicon.

14. The method for manufacturing a touch-on-lens device as claimed in claim 9, wherein the plastic layer and the touch layer of the touch assembly constitute a touch film, wherein the touch sub-assembly comprises the motherboard and a touch module which is formed after cutting the touch film, further wherein the lamination process of step (4) further comprises laminating the touch modules of the touch sub-assemblies to the strengthened lens.

15. The method for manufacturing a touch-on-lens device as claimed in claim 14, further comprising forming a mask layer on the strengthened lens, wherein the mask layer and the touch modules are at the same side of the strengthened lens.

16. A touch-on-lens device comprising:
a strengthened lens; and
a touch module laminated to the strengthened lens, wherein the touch module is, formed by cutting a touch film, further wherein the touch film comprises a touch layer and a plastic layer..

17. The touch-on-lens device as claimed in claim 16, wherein thickness of the plastic layer is between 10µm-20µm.

18. The touch-on-lens device as claimed in claim 16, wherein thickness of the plastic layer is between 0.5µm-10µm.

19. The touch-on-lens device as claimed in claim 16, wherein the plastic layer is a polyimide (PI) layer or a polyesterimide layer.

20. The touch-on-lens device as claimed in claim 16, wherein the touch layer comprises a sensing pattern formed by a photoetching process.

21. The touch-on-lens device as claimed in claim 16, wherein the touch film further comprises a buffer layer, wherein the buffer layer is formed between the touch layer and the plastic layer, further wherein the buffer layer is made of derivative or compound of silicon.

22. The touch-on-lens device as claimed in claim 16, further comprising a mask layer, wherein the mask layer and the touch module are formed at same side of the strengthened lens.
